# FASCICULE DE BREVET EUROPEEN

(11) **EP 3 369 877 B1**
(45) Date de publication et mention de la délivrance du brevet: **06.11.2024**
(21) Numéro de dépôt: 18159652.9
(22) Date de dépôt: 02.03.2018
(51) Int. Cl.: E04H 1/12, E04B 2/74, E04B 9/30, G09F 15/00, G09F 19/22, E04F 13/00

(54) **CADRE COMPRENANT UNE STRUCTURE DE CADRE, UNE TOILE ET UN DISPOSITIF DE FIXATION DE LADITE TOILE SUR UN PROFILÉ DE LADITE STRUCTURE DE CADRE**
RAHMEN UMFASSEND EINE RAHMENSTRUKTUR, EIN GEWEBE UND EINE VORRICHTUNG ZUM BEFESTIGEN DES GEWEBES AUF EINEM PROFIL DER RAHMENSTRUKTUR
FRAME COMPRISING A FRAME STRUCTURE, A FABRIC AND A DEVICE FOR SECURING SAID FABRIC TO A PROFILE OF SAID FRAME STRUCTURE

(30) Priorité: 03.03.2017 FR 1751752
(43) Date de publication de la demande: 05.09.2018
(73) Titulaire: Duo Industrie, 34130 Lansargues (FR)
(72) Inventeur: BEILLE, Philippe, 30420 Calvisson (FR)
(74) Mandataire: IPAZ

(56) Documents cités:
- NL-A- 9 200 994
- US-A- 4 986 332
- US-A1- 2005 230 066
- US-A1- 2015 262 519

## Description

La présente invention concerne un dispositif de fixation d'une toile sur un profilé. Elle concerne également une toile munie d'un tel dispositif de fixation, un profilé prévu pour recevoir un tel dispositif de fixation, une structure de cadre formée par de tels profilés, un cadre comprenant une telle structure de cadre, et une installation formée par de tels cadres fixés entre eux, ou sur un bâti (mur, châssis, structure)

Le domaine de l'invention est le domaine des dispositifs de fixation d'une toile sur une structure de cadre, en particulier, mais de manière nullement limitative, pour la réalisation de stand d'exposition, de stand d'accueil, de panneau d'affichage, de panneau de publicité, de panneau ou cadre de décoration, etc.

### Etat de la technique

Les stands d'exposition et panneaux d'affichage sont généralement formés par des profilés rigides assemblés entre eux de sorte à former une ou plusieurs structures de cadre. Chaque structure de cadre est prévue pour recevoir une toile souple, fixée sur ladite structure à l'aide d'un dispositif de fixation, de manière démontable ou amovible. Ainsi, il est possible d'utiliser, avec une même structure de cadre, différentes toiles permettant une personnalisation à la volée du stand par changement de la toile.

Actuellement, une toile est fixée sur une structure de cadre à l'aide de réglettes souples nommées ici joints de fixation, préalablement cousus ou soudés sur la toile, et venant se loger dans une rainure prévue sur la structure de cadre.

De par leur architecture, les joints de fixation actuels ne permettent pas de couvrir la totalité de la structure de cadre par la toile. Ainsi, lorsque deux cadres sont disposés côté à côte, il existe un espace non couvert par les toiles à la jonction entre les deux cadres.

Un tel espace non couvert provoque un rendu visuel dégradé, surtout lorsque plusieurs cadres sont assemblés entre eux ou bord à bord sur un bâti pour former un seul et unique cadre global.

De plus, l'espace non couvert par la toile au niveau des bords du cadre constitue un espace perdu qui diminue d'autant l'espace utile d'un cadre, ce qui peut être pénalisant, surtout lorsque le nombre de cadre augmente.

On connait du document US 4 986 332 A et du document
NL 9 200 994 A un cadre comprenant un structure de cadre, une toile et un dispositif de fixation de la toile sur le cadre. Cependant, les cadres proposés dans ces documents présentent une construction complexe, peu compacte, peu rigide et ne permettant pas un montage facilité.

Un but de la présente invention est de remédier aux inconvénients précités.

Un autre but de l'invention est de proposer un cadre de construction simple, compacte et rigide et permettant pas un montage facilité.

### Exposé de l'invention

L'invention propose d'atteindre au moins l'un des buts précités par un cadre selon la revendication 1.

Autrement dit, la partie de recouvrement du dispositif de fixation est recourbée par rapport à la partie de fixation dudit dispositif de fixation, vers le bord extérieur du profilé, c'est-à-dire dans un opposé au sens dans lequel la toile s'étend. En d'autres termes, la partie de recouvrement du dispositif de fixation est recourbée par rapport à la partie de fixation du dispositif de fixation, dans une direction perpendiculaire au profilé, allant du bord intérieur au bord extérieur.

Ainsi, le dispositif de fixation permet à la toile d'occuper une plus grande surface dans le sens de la largeur du profilé, ce qui augmente la surface utile dans un cadre formé par un tel profilé. En outre, en ajustant la largeur de la partie de recouvrement, il est même possible d'exploiter la totalité de la largeur du profilé, ce qui permet d'exploiter la totalité de la surface d'un cadre délimité par les bords extérieurs du cadre et au-delà.

Le dispositif de fixation permet également d'améliorer le rendu visuel obtenu avec un cadre ou plusieurs cadres fixés entre eux bord à bord en limitant, voire en éliminant, les espaces non recouverts par la toile à la jonction entre deux cadres.

Préférentiellement, la première partie de fixation du dispositif de fixation peut être prévue pour réaliser une fixation amovible ou démontable, par engagement, et en particulier par engagement mâle-femelle.

Suivant un premier mode de réalisation, la première partie de fixation du dispositif de fixation peut être formée par une forme mâle prévue pour s'insérer dans une ouverture prévue sur le profilé.

Suivant un exemple de réalisation particulièrement préféré de ce premier mode de réalisation, la première partie de fixation du dispositif de fixation peut être formée par une languette prévue pour s'insérer dans une rainure prévue sur une face avant dudit profilé.

Suivant un deuxième mode de réalisation, la première partie de fixation du dispositif de fixation peut être formée par une ouverture prévue pour accueillir une forme mâle, telle qu'une languette, prévue sur le profilé.

Suivant d'autres modes de réalisation alternatifs, la première partie de fixation du dispositif de fixation peut réaliser une fixation amovible, ou démontable, par clipsage, par collage, serrage mécanique etc.

Avantageusement, la partie de recouvrement du dispositif de fixation peut présenter une largeur telle qu'elle s'étend de ladite partie de fixation au moins jusqu'au bord extérieur du profilé, dans la direction allant du bord intérieur vers le bord extérieur.

Ainsi, la partie de recouvrement recouvre la totalité du cadre jusqu'au bord extérieur, ce qui permet à la toile d'occuper la totalité du cadre formé par le profilé.

En particulier, la partie de recouvrement du dispositif de fixation peut présenter une largeur telle qu'elle s'étend de ladite partie de fixation au-delà du bord extérieur du profilé, dans la direction allant du bord intérieur vers le bord extérieur.

Ainsi, la partie de recouvrement dépasse le bord extérieur du profilé de sorte qu'elle peut venir s'écraser par compression sur un dispositif de fixation d'un profilé, ou d'un cadre, adjacent pour assurer une connexion continue, sans aucun espace entre les deux cadres adjacents.

Suivant une autre caractéristique particulièrement avantageuse, l'extrémité distale de la partie de recouvrement du dispositif de fixation peut présenter une épaisseur plus faible comparée au reste de la partie de recouvrement, ce qui facilite sa compression ou sa déformation lorsqu'elle vient s'écraser par compression sur un dispositif de fixation d'un profilé, ou d'un cadre, adjacent.

En particulier, la surface supérieure de la partie de recouvrement du dispositif de fixation peut comporter une portion distale rentrant vers le profilé.

La portion distale, ou l'extrémité distale de la partie de recouvrement, correspond à celle se trouvant à l'opposé de la partie de fixation.

La surface supérieure de la partie de recouvrement correspond à celle se trouvant du côté de la toile, opposée à celle se trouvant du côté du profilé.

Ainsi, la partie de recouvrement vient s'écraser par compression sur un dispositif de fixation d'un profilé, ou d'un cadre, adjacent, et s'enfonce naturellement vers les deux profilés, ou cadres, adjacents de sorte qu'il ne fait pas sailli vers la toile. Cela permet d'obtenir une jonction non débordant et une surface continue lors de l'association de deux cadres côte à côte.

Suivant un exemple de réalisation, l'extrémité distale de la partie de recouvrement du dispositif de fixation peut être biseautée par au moins une découpe oblique, par exemple d'un angle de 45°, partant de la surface supérieure et rentrant vers le profilé.

Suivant un exemple de réalisation préféré, l'extrémité distale de la partie de recouvrement du dispositif de fixation peut être biseautée par :
- une première découpe oblique partant de la surface supérieure et rentrant vers le profilé, et
- une deuxième découpe oblique partant de la surface inférieure et fuyant le profilé.

La première découpe peut être réalisée sur une distance plus grande comparée à la deuxième découpe.

Chacune des découpes peut présenter un angle de 45°, par exemple

La toile peut être fixée au profilé par coincement entre le dispositif de fixation et le profilé. Dans ce cas, la toile fait le tour du dispositif de fixation et revient vers la partie de fixation, de sorte qu'une fois en place la toile recouvre la partie de recouvrement.

Alternativement, ou en plus, le dispositif de fixation peut en outre comprendre une deuxième partie de fixation, pour fixer la toile sur ledit dispositif.

La deuxième partie de fixation peut être formée par une surface du dispositif de fixation à laquelle la toile est fixée préalablement à l'assemblage avec le profilé.

La toile peut être fixée à la surface de fixation par couture, collage, soudage, agrafage, etc.

Avantageusement, la deuxième partie de fixation du dispositif de fixation peut être formée par une surface de la première partie de fixation.

La surface de la première partie de fixation servant de surface de fixation de la toile au dispositif de fixation peut se trouver du côté de la partie de recouvrement, ou du bord extérieur du profilé.

La surface de la première partie de fixation servant de surface de fixation de la toile au dispositif de fixation peut être une surface, qui en utilisation, se trouve engagée avec un moyen de fixation prévu sur le profilé, tel qu'une rainure prévue pour accueillir la première partie de fixation, ce qui permet de rendre la fixation de la toile plus robuste.

Dans tous les cas, la deuxième partie de fixation du dispositif de fixation est choisie de sorte que, lorsque la toile est fixée à ladite deuxième partie de fixation, ladite toile recouvre la partie de recouvrement dudit dispositif de fixation.

Alternativement, la deuxième partie de fixation du dispositif de fixation peut être formée par une surface de la partie de recouvrement.

Selon l'invention, le dispositif de fixation se présente sous la forme d'un « **Γ** » (un « **L** » renversé) ou d'un « **T** » dont la branche verticale forme la partie de fixation et la branche horizontale forme la partie de recouvrement.

Le dispositif de fixation peut être réalisé en un matériau rigide, tel que du plastique dur, ou métal ou encore de l'aluminium.

Préférentiellement, le dispositif de fixation peut être réalisé en un matériau souple par exemple réalisé en silicone, en élastomère thermoplastique (TPE), en PVC.

Le dispositif de fixation peut, préférentiellement, se présenter sous la forme d'un joint souple.

Le dispositif de fixation peut être réalisé par moulage ou par extrusion, ou par toute autre technique connue.

La toile peut être munie d'un dispositif de fixation sur au moins une partie de sa périphérie.

En particulier, la toile peut être munie de dispositifs de fixation sur toute sa périphérie, de manière continue ou discontinue.

Le dispositif de fixation peut être fixé sur la toile par couture, collage soudage, agrafage, moulage, etc.

Selon l'invention, le profilé comprend une rainure, formée entre un bord intérieur et un bord extérieur, et prévue pour recevoir la première partie de fixation dudit dispositif, ledit profilé présentant entre son bord extérieur et la rainure une épaisseur inférieure à son épaisseur entre son bord intérieur et la rainure.

Une telle différence d'épaisseur permet de compenser la surépaisseur formée par la partie de recouvrement entre la rainure et le bord extérieur, de sorte à obtenir une surface plane lorsque la toile est fixée sur le profilé.

Préférentiellement, la différence d'épaisseur peut correspondre, ou être supérieur, à l'épaisseur de la partie de recouvrement, éventuellement augmentée de l'épaisseur de la toile.

Le profilé peut être réalisé en un matériau rigide, tel que du plastique dur, aluminium, métal, bois, matériau composite etc.

La structure de cadre, prévue pour recevoir la toile, comprend au moins un profilé.

Lorsque la structure de cadre est rectangulaire, elle peut comprendre deux profilés formant deux côtés opposés de la structure de cadre, et préférentiellement quatre profilés formant chacun un côté de ladite structure.

Plus généralement, la structure de cadre peut être formée par un profilé sur chacun de ces côtés.

Suivant encore un autre aspect de la même invention, il est proposé une installation formée par plusieurs cadres selon l'invention fixés entre eux ou apposés et liés à un bâti

Les cadres peuvent être fixés entre eux de bout, par exemple par vissage ou par boulonnage, ou par tout autre dispositif de positionnement et de maintien, ou apposés et liés à un bâti

### Description des figures et modes de réalisation

D'autres avantages et caractéristiques apparaîtront à l'examen de la description détaillée de modes de réalisation nullement limitatifs, et des dessins annexés sur lesquels :
- les FIGURES 1 à 3 sont des représentations schématiques partielles d'exemples de réalisation d'un cadre mettant en oeuvre un dispositif de fixation ;
- la FIGURE 4 est une représentation schématique d'un autre exemple de réalisation non limitatif d'un dispositif de fixation pouvant être utilisé dans un cadre selon l'invention ;
- la FIGURE 5 est une représentation schématique partielle d'un autre exemple de cadre mettant en oeuvre le dispositif de fixation de la FIGURE 4 ;
- la FIGURE 6 est une représentation schématique partielle d'un exemple de réalisation non limitatif d'une installation comprenant deux cadres fixés entre eux ;
- la FIGURE 7 est une représentation schématique partielle d'un exemple de réalisation non limitatif d'un cadre selon l'invention ; et
- la FIGURE 8 est une représentation schématique partielle d'un autre exemple de réalisation non limitatif d'un cadre mettant en oeuvre un dispositif de fixation.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est comprise dans l'étendue de l'invention, délimitée par les revendications ci-jointes.

Sur les FIGURES, les éléments communs à plusieurs FIGURES conservent la même référence.

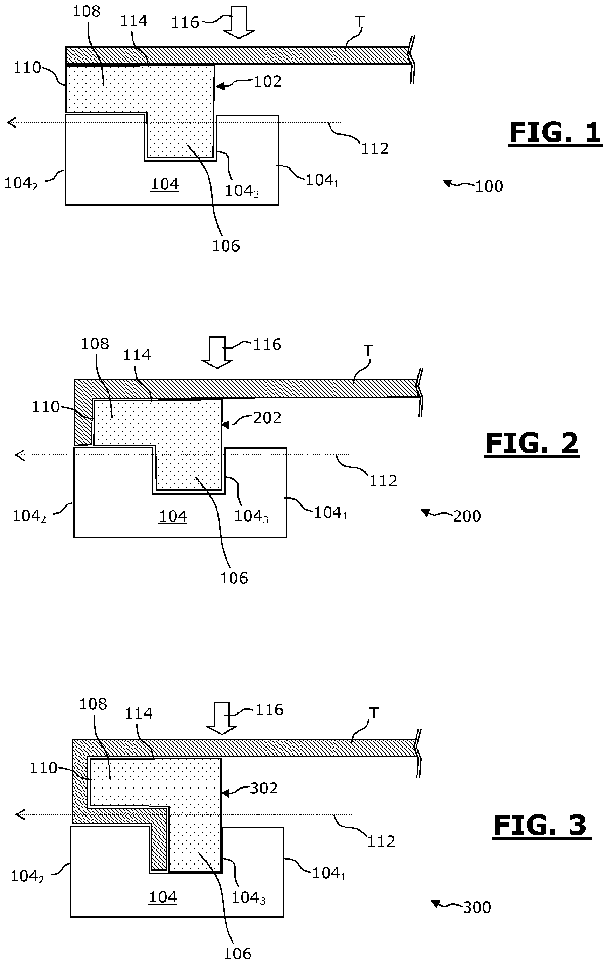

La FIGURE 1 est une représentation schématique partielle, selon une vue de coupe, d'un exemple de réalisation non limitatif d'un cadre.

Le cadre 100, représenté sur la FIGURE 1, comprend un dispositif de fixation 102 utilisé pour fixer une toile T sur un profilé 104, formant un côté d'un cadre par exemple.

Le profilé 104 comporte un bord intérieur 104₁ se trouvant du côté de la toile T et un bord extérieur 104₂ se trouvant du côté opposé à la toile T. Autrement dit, la toile T s'étend du côté du bord intérieur 104₁ du profilé 104.

Le profilé 104 comporte une rainure 104₃ pour fixer le dispositif de fixation 102 au profilé 104, par exemple par serrage, arcboutement, pincement etc.

Le dispositif de fixation 102 comporte une partie de fixation 106 venant se loger dans la rainure 104₃. La rainure 104₃, ou la partie de fixation 106, peut être crantée pour aider au maintien de la partie de fixation 106 dans la rainure 104₃.

Le dispositif de fixation 102 comporte en outre une partie de recouvrement 108, formant un débord, et se prolongeant de la rainure 104₃ vers le bord extérieur 104₂ du profilé et venant recouvrir une partie, ou la totalité du profilé, entre la rainure 104₃ et le bord extérieur 104₂ du profilé. La largeur de la partie de recouvrement 108 est ajustée de sorte que l'extrémité distale 110 de la partie de recouvrement 108 est alignée avec le bord extérieur 104₂ du profilé 104.

Autrement dit, la partie de recouvrement 108, ou le débord 108, s'étend au-delà de la partie de fixation 106 dans la direction 112 allant du bord intérieur 104₁ du profilé 104 vers le bord extérieur 104₂ du profilé 104.

La partie de recouvrement 108 est elle-même recouverte par la toile T, jusqu'à l'extrémité distale 110 de la partie de recouvrement 108.

La toile T est fixée à la surface supérieure 114 de ladite partie de recouvrement 108 par exemple par collage ou soudage.

Ainsi, vue d'une direction 116 faisant face à la toile T, le profilé 104 est entièrement recouvert par la toile T et le profilé 104 n'est plus visible.

Le profilé 104 est réalisé en aluminium et le dispositif de fixation 102 se présente sous la forme d'un joint souple réalisé en silicone.

La FIGURE 2 est une représentation schématique partielle, selon une vue de coupe, d'un deuxième exemple de réalisation non limitatif d'un cadre.

Le cadre 200, représenté sur la FIGURE 2, reprend les mêmes éléments que le cadre 100 de la FIGURE 1.

A la différence du cadre 100 de la FIGURE 1, le cadre 200 met en oeuvre un dispositif de fixation 202 dont la partie de recouvrement 108 s'arrête avant le bord extérieur 104₂ du profilé 104. Autrement dit, l'extrémité distale 110 de la partie de recouvrement 108 se trouve en retrait par rapport au bord extérieur 104₂ du profilé 104.

La toile T recouvre entièrement la partie de recouvrement 108, y compris l'extrémité distale 110 de la partie de recouvrement 108.

Dans cette configuration, la toile T peut être fixée à l'extrémité distale 110 de la partie de recouvrement, et/ou à la surface supérieure 114 de la partie de recouvrement 108.

La FIGURE 3 est une représentation schématique partielle, selon une vue de coupe, d'un troisième exemple de réalisation non limitatif d'un cadre.

Le cadre 300, représenté sur la FIGURE 3, reprend les mêmes éléments que le cadre 200 de la FIGURE 2.

A la différence du cadre 200 de la FIGURE 2, le cadre 300 met en oeuvre un dispositif de fixation 302 dont la partie de fixation 106 présente une épaisseur plus faible comparée à l'épaisseur de la partie de fixation 106 du dispositif de fixation 202. La toile T recouvre entièrement la partie de recouvrement 108, y compris l'extrémité distale 110 de la partie de recouvrement 108, et se prolonge jusqu'à la partie de fixation 106. La bordure périphérique de la toile T est insérée dans la rainure 104₃ avec la partie de fixation 106, de sorte qu'elle est coincée dans la rainure 104₃ entre la partie de fixation 106 et le profilé 104.

Dans cette configuration, la toile T peut être fixée à la partie de fixation 106, et en particulier à la surface de la partie de fixation 106 se trouvant du côté du bord extérieur 104₂ du profilé 104. En particulier la toile T peut être collée, soudée ou cousue sur cette surface de la partie de fixation 106.

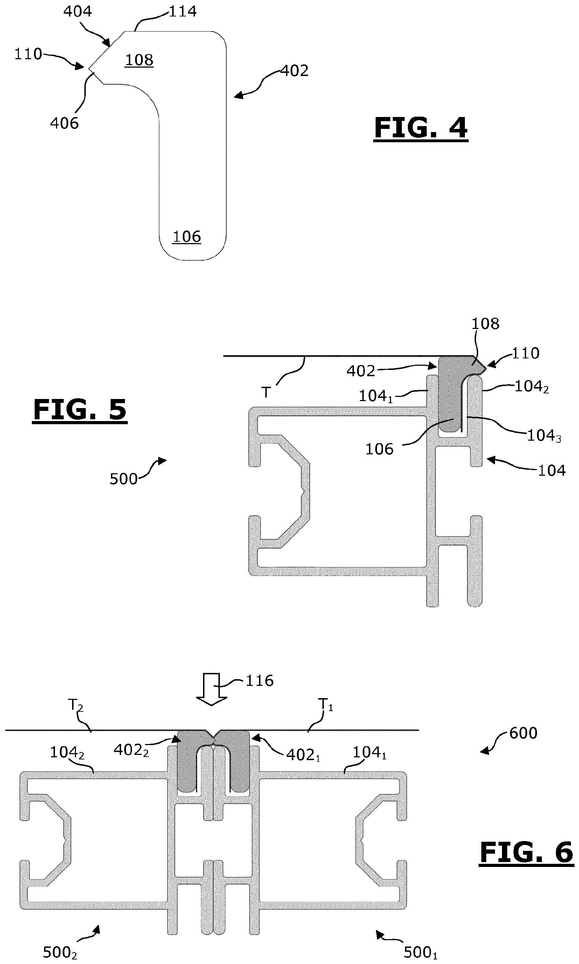

La FIGURE 4 est une représentation schématique, selon une vue de coupe, d'un exemple de réalisation non limitatif d'un autre dispositif de fixation.

Le dispositif de fixation 402 de la FIGURE 4 est un exemple de réalisation préféré.

Le dispositif 402 de la FIGURE 4 comprend, à l'instar des dispositifs 102, 202 et 302, une partie de fixation 106 et une partie de recouvrement 108.

En outre, dans le dispositif de fixation 402 de la FIGURE 4, l'épaisseur de la partie de recouvrement 108 diminue du côté de son extrémité distale 110.

En particulier, l'extrémité distale 110 de la partie de recouvrement 108 est biseautée. Cette extrémité distale biseautée 110 est obtenue par :
- une première découpe oblique 404 partant de la surface supérieure 114 et rentrant vers le profilé, et
- une deuxième découpe oblique 406 partant de la surface inférieure et fuyant le profilé.

La première découpe 404 est réalisée sur une distance plus grande comparée à la deuxième découpe 406 de sorte que la pointe du biseau se trouve plus proche du profilé.

La FIGURE 5 est une représentation schématique partielle, selon une vue de coupe, d'un autre exemple de réalisation d'un cadre.

Le cadre 500, représenté sur la FIGURE 5, met en oeuvre le dispositif de fixation 402 de la FIGURE 4, dans la configuration représentée sur la FIGURE 3.

Pour rappel, dans cette configuration, la toile T recouvre entièrement la partie de recouvrement 108, y compris l'extrémité distale 110 de la partie de recouvrement 108, et se prolonge jusqu'à la partie de fixation 106 se trouvant dans la rainure 104₃. La toile T est fixée à la surface de la partie de fixation 106 se trouvant du côté du bord extérieur 104₂ du profilé 104. La bordure de la toile T se trouve donc dans la rainure 104₃.

La largeur de la partie de recouvrement 108 est ajustée de sorte que la partie de recouvrement 108 dépasse le bord extérieur 104₂ du profilé 104. Autrement dit, l'extrémité distale 110 de la partie de recouvrement 108 fait sailli du profilé 104 dans la direction opposée à celle selon laquelle la toile T s'étend.

La FIGURE 6 est une représentation schématique partielle, selon une vue de coupe, d'un exemple de réalisation non limitatif d'une installation.

L'installation 600, représentée sur la FIGURE 5, est obtenue par assemblage, de bout, de deux cadres 500₁ et 500₂, identiques au cadre 500 de la FIGURE 5. L'assemblage des cadres 500₁ et 500₂ peut être réalisé par vissage ou boulonnage ou par tout autre procédé de fixation connu.

Le cadre 500₁ est formé par une toile T₁, un cadre 104₁ identique au cadre 104 des FIGURES 1-5 et un dispositif de fixation 402₁ identique au dispositif de fixation 402 de la FIGURE 4.

Le cadre 500₂ est formé par une toile T₂, un cadre 104₂ identique au cadre 104 des FIGURES 1-5 et un dispositif de fixation 402₂ identique au dispositif de fixation 402 de la FIGURE 4.

Comme on le voit sur la FIGURE 6, l'extrémité distale de chaque dispositif de fixation, respectivement 402₁ et 402₂, dépassant du bord extérieur du cadre, respectivement 104₁ et 104₂, les dispositifs de fixation 402₁ et 402₂ viennent en contact l'un de l'autre au niveau de leurs extrémités distales respectives, s'écrasent par compression l'un contre l'autre. Cela permet d'assurer une connexion et une continuité parfaite entre les cadres 500₁ et 500₂, en particulier à la jonction de ces cadres.

Ainsi, vue de la direction 116 faisant face aux toiles T₁ et T₂, et donc à la structure 600, les cadres 104₁ et 104₂ ne sont pas visibles.

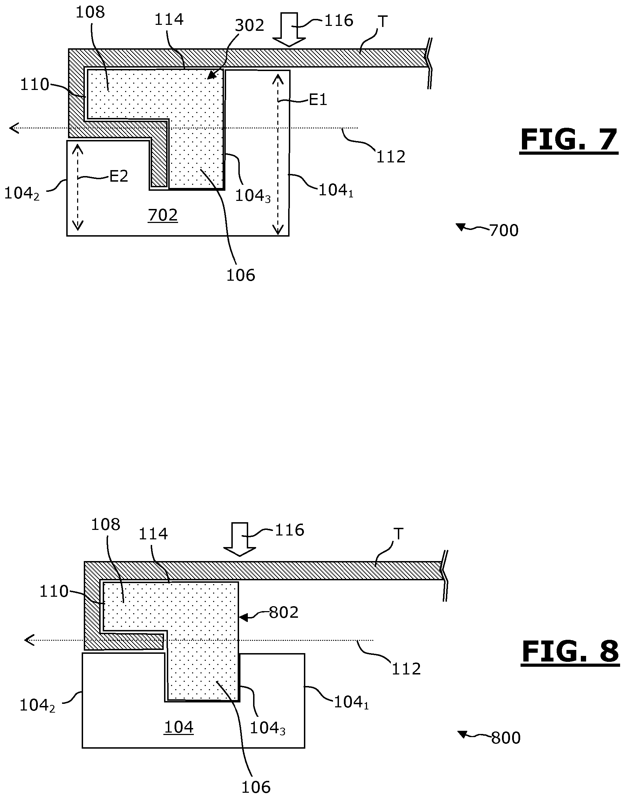

La FIGURE 7 est une représentation schématique, selon une vue de coupe, d'un exemple de réalisation non limitatif d'un profilé selon l'invention, en configuration d'utilisation.

Le cadre 700, représenté sur la FIGURE 7, reprend les mêmes éléments que le cadre 300 de la FIGURE 3.

A la différence du cadre 300 de la FIGURE 3, le cadre 700 met en oeuvre un profilé 702 différent du profilé 104.

A la différence du profilé 104 représenté sur la FIGURE 3, le profilé 702 de la FIGURE 7 comporte une épaisseur E1 entre son bord intérieur 104₁ et la rainure 104₃ plus grande comparée à son épaisseur E2 entre la rainure 104₃ et son bord extérieur 104₂.

En particulier, l'épaisseur E1 est choisie de sorte que le profilé 702 et le dispositif de fixation 302 se trouvent à la même hauteur, au niveau de la partie de fixation 106.

Cette différence d'épaisseur peut par exemple être obtenue en diminuant l'épaisseur d'un profilé existant entre la rainure 104₃ et le bord extérieur 104₂, d'une quantité souhaitée. Cette diminution d'épaisseur peut être réalisée par enlèvement de matière entre la rainure 104₃ et le bord extérieur, par exemple par un procédé d'usinage.

Alternativement, cette différence d'épaisseur peut être prévue lors de la fabrication du profilé.

La FIGURE 8 est une représentation schématique partielle, selon une vue de coupe, d'un autre exemple de réalisation non limitatif d'un cadre.

Le cadre 800, représenté sur la FIGURE 8, reprend les mêmes éléments que le cadre 200 de la FIGURE 2.

A la différence du cadre 200 de la FIGURE 2, le cadre 800 met en oeuvre un dispositif de fixation 802 dont la partie de recouvrement 106 présente une épaisseur plus faible comparée à l'épaisseur de la partie de recouvrement 106 du dispositif de fixation 202.

La toile T recouvre entièrement la partie de recouvrement 108, y compris l'extrémité distale 110 de la partie de recouvrement 108, et se prolonge jusque sous la partie de recouvrement et s'arrête au niveau de la partie de fixation 106, ou juste avant la partie de fixation 106. La bordure périphérique de la toile T est insérée sous la partie de recouvrement 108, de sorte qu'elle est coincée la partie de recouvrement 108 et le profilé 104.

Dans cette configuration, la toile T peut être fixée à la partie de recouvrement 108.

Dans les exemples décrits, la rainure 104₃ est orientée de manière perpendiculaire par rapport à la toile. Bien entendu, suivant des exemples de réalisation alternatifs, la rainure peut être orientée :
- vers le bord extérieur 104₂. En particulier, la rainure peut être orientée suivant une direction formant un angle supérieur à 90°, voire supérieur à 100°, par rapport à la toile ; ou
- vers le bord intérieur 104₁. En particulier, la rainure peut être orientée suivant une direction formant un angle inférieur à 90°, voire inférieur à 80°, par rapport à la toile.

En outre, dans les exemples décrits, la partie de recouvrement forme un angle droit par rapport à la partie de fixation. Suivant des exemples de réalisation alternatifs les parties de recouvrement 108 et de fixation 106 peuvent former un angle :
- inférieur à 90°, et en particulier à 80°, en particulier lorsque la rainure 104₃ est orientée vers le bord intérieur 104₁; ou
- supérieur à 90°, et en particulier à 100°, en particulier lorsque la rainure 104₃ est orientée vers le bord extérieur 104₁.

Bien entendu, l'invention n'est pas limitée aux exemples qui viennent d'être décrits.

Par exemple, il est possible d'utiliser un moyen de fixation différent d'une rainure du côté du profilé. Il est également possible d'utiliser d'autres formes de profilés que ceux représentés.

## Revendications

1. Cadre (100;200;300;500;800) comprenant :
- une structure de cadre,
- une toile (T), et
- un dispositif de fixation (102;202;302;402;802), de manière amovible ou démontable, de ladite toile (T) à un profilé (104;702) de ladite structure de cadre comportant un bord intérieur (104₁) et un bord extérieur (104₂) opposé audit bord intérieur (104₁), de sorte qu'une fois fixée ladite toile (T) s'étend du côté dudit bord intérieur (104₁) ;
ledit dispositif de fixation (102;202;302;402;802) comportant :
- une première partie de fixation (106), pour fixer ledit dispositif (102;202;302;402;802) audit profilé (104;702), et
- une partie (108), dit de recouvrement, prévue pour être recouverte par ladite toile (102), ladite partie de recouvrement (108) s'étendant au-delà de ladite partie de fixation (106) vers le bord extérieur (104₂), dans la direction (112) allant du bord intérieur (104₁) vers le bord extérieur (104₂) ;
**caractérisé en ce que** ledit dispositif de fixation se présente sous la forme d'un « **Γ** » ou d'un « **T** » dont la branche verticale forme ladite première partie de fixation (106) et la branche horizontale forme la partie de recouvrement (108) ;
et **en ce que** ledit profilé (702) comprend une rainure (104₃), formée entre un bord intérieur (104₁) et un bord extérieur (104₂) dudit profilé (702), et prévue pour recevoir ladite première partie de fixation (106) dudit dispositif de fixation (102;202;302;402;802), ledit profilé (702) présentant entre son bord extérieur (104₂) et la rainure (104₃) une épaisseur 1 (E₂) inférieure à son épaisseur (E₁) entre son bord intérieur (104₁) et la rainure (104₃)

2. Cadre selon la revendication précédente, **caractérisé en ce que** la première partie de fixation (106) du dispositif de fixation (102;202;302;402;802) est formée par une languette prévue pour s'insérer dans la rainure (104₃) prévue sur une face avant du profilé (702).

3. Cadre selon l'une quelconque des revendications précédentes, **caractérisé en ce que** la partie de recouvrement (108) du dispositif de fixation (102;402) présente une largeur telle qu'elle s'étend de la partie de fixation (106) au moins jusqu'au bord extérieur (104₂) du profilé (104), dans la direction (112) allant du bord intérieur (104₁) vers le bord extérieur (104₂).

4. Cadre selon la revendication précédente, **caractérisé en ce que** la partie de recouvrement (108) du dispositif de fixation (402) présente une largeur telle qu'elle s'étend de la partie de fixation (106) à au-delà du bord extérieur (104₂) du profilé, dans la direction (112) allant du bord intérieur (104₁) vers le bord extérieur (104₂) du profilé.

5. Cadre selon la revendication précédente, **caractérisé en ce que** la surface supérieure (114) de la partie de recouvrement (108) du dispositif de fixation (402) comporte une portion distale rentrant vers le profilé (702).

6. Cadre selon l'une quelconque des revendications précédentes, **caractérisé en ce que** le dispositif de fixation (102;202;302;402;802) comprend en outre une deuxième partie de fixation, pour fixer la toile (T) sur ledit dispositif de fixation (102;202;302;402;802).

7. Cadre selon la revendication précédente, **caractérisé en ce que** la deuxième partie de fixation du dispositif de fixation (102;202;302;402) est formée par une surface de la première partie de fixation (106) dudit dispositif de fixation (102;202;302;402).

8. Cadre selon l'une quelconque des revendications précédentes, **caractérisé en ce que**, pour le profilé, la différence d'épaisseur correspond, ou est supérieur, à l'épaisseur de la partie de recouvrement (108), éventuellement augmentée de l'épaisseur de la toile (T).

9. Installation (600) formée par plusieurs cadres (500₁,500₂) selon l'une quelconque des revendications précédentes, fixées entre eux.

## Patentansprüche

1. Rahmen (100; 200; 300; 500; 800) umfassend:
- eine Rahmenkonstruktion,
- ein Tuch (T) und
- eine Vorrichtung (102; 202; 302; 402; 802) zum abnehmbaren oder demontierbaren Befestigen des Tuchs (T) an einem Profil (104; 702) der Rahmenstruktur, das eine Innenkante (104₁) und eine Außenkante (104₂) aufweist, die der Innenkante (104₁) gegenüberliegt, sodass sich das Tuch (T), wenn es befestigt ist, von der Seite der Innenkante (104₁) erstreckt;
wobei die Befestigungsvorrichtung (102; 202; 302; 402; 802) aufweist:
- einen ersten Befestigungsteil (106) zum Befestigen der Vorrichtung (102; 202; 302; 402; 802) an dem Profil (104; 702) und
- einen sogenannten Abdeckteil (108), der zum Abgedecktwerden durch das Tuch (102) vorgesehen ist, wobei sich der Abdeckteil (108) über den Befestigungsteil (106) hinaus zu der Außenkante (104₂) hin in die Richtung (112) von der Innenkante (104₁) zu der Außenkante (104₂) hin erstreckt;
**dadurch gekennzeichnet, dass** die Befestigungsvorrichtung die Form eines "**Γ**" oder eines "**T**" aufweist, dessen vertikaler Schenkel den ersten Befestigungsteil (106) ausbildet und dessen horizontaler Schenkel den Abdeckteil (108) ausbildet;
und **dass** das Profil (702) eine Nut (104₃) umfasst, die zwischen einer Innenkante (104₁) und einer Außenkante (104₂) des Profils (702) ausgebildet ist und zum Aufnehmen des ersten Befestigungsteils (106) der Befestigungsvorrichtung (102; 202; 302; 402; 802) vorgesehen ist, wobei das Profil (702) zwischen seiner Außenkante (104₂) und der Nut (104₃) eine Dicke (E₂) aufweist, die geringer als seine Dicke (E₁) zwischen seiner Innenkante (104₁) und der Nut (104₃) ist.

2. Rahmen nach dem vorstehenden Anspruch,
**dadurch gekennzeichnet, dass** der erste Befestigungsteil (106) der Befestigungsvorrichtung (102; 202; 302; 402; 802) durch eine Zunge ausgebildet ist, die zum sich Einfügen in die Nut (104₃) vorgesehen ist, die auf einer Vorderfläche des Profils (702) vorgesehen ist.

3. Rahmen nach einem der vorstehenden Ansprüche,
**dadurch gekennzeichnet, dass** der Abdeckteil (108) der Befestigungsvorrichtung (102; 402) eine solche Breite aufweist, dass er sich von dem Befestigungsteil (106) mindestens bis zu der Außenkante (104₂) des Profils (104) in die Richtung (112) von der Innenkante (104₁) zu der Außenkante (104₂) hin erstreckt.

4. Rahmen nach dem vorstehenden Anspruch,
**dadurch gekennzeichnet, dass** der Abdeckteil (108) der Befestigungsvorrichtung (402) eine solche Breite aufweist, dass er sich von dem Befestigungsteil (106) über die Außenkante (104₂) des Profils in die Richtung (112) von der Innenkante (104₁) zu der Außenkante (104₂) des Profils hin erstreckt.

5. Rahmen nach dem vorstehenden Anspruch,
**dadurch gekennzeichnet, dass** die obere Oberfläche (114) des Abdeckteils (108) der Befestigungsvorrichtung (402) einen distalen Abschnitt aufweist, der sich zu dem Profil (702) hin zurückzieht.

6. Rahmen nach einem der vorstehenden Ansprüche,
**dadurch gekennzeichnet, dass** die Befestigungsvorrichtung (102; 202; 302; 402; 802) ferner ein zweites Befestigungsteil zum Befestigen des Tuchs (T) an der Befestigungsvorrichtung (102; 202; 302; 402; 802) umfasst.

7. Rahmen nach dem vorstehenden Anspruch,
**dadurch gekennzeichnet, dass** der zweite Befestigungsteil der Befestigungsvorrichtung (102; 202; 302; 402) durch eine Oberfläche des ersten Befestigungsteils (106) der Befestigungsvorrichtung (102; 202; 302; 402) ausgebildet ist.

8. Rahmen nach einem der vorstehenden Ansprüche,
**dadurch gekennzeichnet, dass** für das Profil der Dickenunterschied der Dicke des Abdeckteils (108) entspricht oder größer, gegebenenfalls um die Dicke des Tuchs (T) erhöht, ist.

9. Einrichtung (600), die durch mehrere aneinander befestigte Rahmen (500₁, 500₂) nach einem der vorstehenden Ansprüche ausgebildet ist.

## Claims

1. A frame (100;200;300;500;800) comprising:
- a frame structure,
- a fabric (T),
- a fastening device (102;202;302;402;802) for fastening, in a removable or detachable manner, said fabric (T) to a profile (104;702) of said frame structure, comprising an inner edge (104₁) and an outer edge (104z) opposite said inner edge (104₁), such that once fastened, said fabric (T) extends to the side of said inner edge (104₁) ;
said fastening device (102;202;302;402;802) comprising:
- a first fastening part (106), for fastening said device (102;202;302;402;802) to said profile (104;702),
- a part (108), called covering part, provided to be covered by said fabric (102), said covering part (108) extending beyond said fastening part (106) to the outer edge (104z), in the direction (112) from the inner edge (104₁) towards the outer edge (104z);
**characterized in that** said fastening device is in the shape of a "**Γ**" or of a "**T**" the vertical arm of which forms said first fastening part (106) and the horizontal arm forms the covering part (108);
and **in that** said profile (702) comprises a groove (104₃), formed between an inner edge (104₁) and an outer edge (104₂) of said profile, and provided for receiving the first fastening part (106) of said fastening device (102;202;302;402;802), said profile (702) having between its outer edge (104₂) and the groove (104₃) a thickness (E₂) less than its thickness (E₁) between its inner edge (104₁) and the groove (104₃).

2. The frame according to the preceding claim, **characterized in that** the first fastening part (106) of the fastening device (102;202;302;402;802) is formed by a tongue provided for insertion into the groove (104₃) provided on a front face of the profile (702).

3. The frame according to any one of the preceding claims, **characterized in that** the covering part (108) of the fastening device (102,402) has a width such that it extends from the fastening part (106) at least up to the outer edge (104₂) of the profile (104), in the direction (112) from the inner edge (104₁) towards the outer edge (104₂).

4. The frame according to the preceding claim, **characterized in that** the covering part (108) of the fastening device (402) has a width such that it extends from the fastening part (106) to beyond the outer edge (104₂) of the profile, in the direction (112) from the inner edge (104₁) towards the outer edge (104₂) of the profile.

5. The frame according to the preceding claim, **characterized in that** the upper surface (114) of the covering part (108) of the fastening device (402) comprises a distal portion returning towards the profile (702).

6. The frame according to any one of the preceding claims, **characterized in that** the fastening device (102;202;302;402;802) comprises moreover a second fastening part, for fastening the fabric (T) onto said fastening device (102;202;302;402;802).

7. The frame according to the preceding claim, **characterized in that** the second fastening part of the fastening device (102;202;302;402) is formed by a surface of the first fastening part (106) of the fastening device (102;202;302;402).

8. The frame according to any one of the preceding claims, **characterized in that**, for the profile, the difference in thickness corresponds to, or is greater than, the thickness of the covering part (108), optionally increased by the thickness of the fabric (T).

9. An installation (600) formed by several frames (500₁;500₂) according to any one of claims 12 or 13, fastened together.
